# EUROPÄISCHE PATENTSCHRIFT

(11) **EP 0 917 860 B1**
(45) Veröffentlichungstag und Bekanntmachung des Hinweises auf die Patenterteilung: **23.04.2003**
(21) Anmeldenummer: 98121367.1
(22) Anmeldetag: 10.11.1998
(51) Int. Cl.: A61C 13/20, A61C 13/267, A61C 13/265, A61C 13/275, A61C 5/08

(54) **Vorrichtung zum Zahnersatz**
Device for dental prosthesis
Dispositif pour prothèse dentaire

(30) Priorität: 24.11.1997 DE 19751999
(43) Veröffentlichungstag der Anmeldung: 26.05.1999
(73) Patentinhaber: Purner, Helmut, 5020 Salzburg (AT)
(72) Erfinder: Purner, Helmut, 5020 Salzburg (AT)
(74) Vertreter: Haft, von Puttkamer, Berngruber, Czybulka

(56) Entgegenhaltungen:
- EP-A- 0 687 451
- EP-A- 0 790 044
- DE-A- 2 107 931
- DE-A- 4 420 044
- US-A- 4 259 073
- US-A- 4 731 020

## Beschreibung

Die Erfindung bezieht sich auf eine Vorrichtung zum Zahnersatz mit einem Träger, der an wenigstens einem natürlichen Restzahn verankerbar ist und auf dem wenigstens ein Ersatzzahn befestigbar ist.

Beim Zahnersatz werden die verschiedensten Teile aus Metall gefertigt. So weist partiell abnehmbarer Zahnersatz als Träger für die Prothesezähne beispielsweise einen Prothesesattel aus Metall auf, der mit Klammern aus Metalldraht an den im Mund verbliebenen Zähnen befestigt wird. Durch Metallabrieb können Allergien auftreten; auch führt Metall im Mund im sichtbaren Bereich durch Reflektion zu einer erheblichen Beeinträchtigung des Aussehens.

Aus DE 44 20 044 A1 ist bereits bekannt, den Metalldraht für die Klammern von abnehmbarem Zahnersatz durch einen Draht aus einem aromatischen Thermoplasten zu ersetzen, und bei mehreren Prothesesätteln auch den Bügel oder die Platte, die die Prothesesättel verbinden. Als aromatischer Thermoplast wird insbesondere Polyetheretherketon (PEEK) verwendet.

Die Verankerung des Drahtes bzw. des Bügels oder der Platte erfolgt dabei durch Eingießen in das Acrylharz, aus dem die einzelnen Prothesesättel mit den Zähnen in einem Stück gegossen werden. Nach dem bekannten Verfahren kann zwar auf den Einsatz von Metall bei abnehmbarem Zahnersatz verzichtet werden, auch ist der Halt des Zahnersatzes gleich gut wie bei Verwendung von Metallkomponenten. Das bekannte Verfahren ist jedoch mit einem erheblich größeren Arbeitsaufwand verbunden.

Aufgabe der Erfindung ist es, einen in einfacher Weise herstellbaren Zahnersatz bereitzustellen, der einen sicheren Halt gewährleistet, bei dem jedoch auf Metall praktisch ganz verzichtet werden kann.

Dies wird erfindungsgemäß dadurch erreicht, dass der Träger, mit dem der Zahnersatz an den natürlichen Restzähnen verankerbar ist und der die Prothesezähne trägt, durch Spritzguß aus einem aromatischen thermoplastischen Kunststoff hergestellt wird.

Der aromatische Thermoplast besteht aus aromatischen Einheiten, z.B. Phenylgruppen, die durch Sauerstoff-, Amid-, Imid-, Keton-, Ester- oder dgl. zweiwertige Brücken linear miteinander verknüpft sind. Als besonders geeignet hat sich Polyetheretherketon (PEEK) erwiesen.

Die Herstellung des Trägers erfolgt z.B. durch folgende Schritte:
- von einem Gebißabdruck des Patienten wird ein Sägemodell hergestellt,
- an dem Sägemodell mit Wachs oder dgl. modulierbarem, brennbarem Material der Träger modelliert,
- der aus Wachs modellierte Träger wird in einer Primärform angeordnet, und zwar derart, dass Drähte oder Stäbe aus Wachs oder einem anderen brennbaren Material den Wachsträger mit der Außenseite der Form verbinden,
- die Primärform wird mit einer feuerfesten Einbettmasse gefüllt,
- die Einbettmasse wird ausgehärtet,
- der Wachsträger und die Stäbe oder Drähte aus brennbarem Material werden zur Bildung einer Spritzgußform mit einem Trägerhohlraum und Einspritzkanälen ausgebrannt,
- über die Einspritzkanäle wird der plastifizierte aromatische Thermoplast in den Trägerhohlraum gepreßt,
- der Träger wird nach dem Abkühlen der Spritzgußform entformt, und
- der Träger wird mit künstlichen Zähnen z.B. aus Acrylharz verblendet.

Um Gaseinschlüsse in dem Träger zu verhindern, ist es wichtig, dass der plastifizierte aromatische Thermoplast beim Spritzgießen Vakuum ausgesetzt ist. Desgleichen hat es sich als wichtig erwiesen, die Spritzgußform beim Spritzgießen zu erwärmen.

Nach der Erfindung kann sowohl abnehmbarer Zahnersatz wie festsitzender Zahnersatz hergestellt werden.

Beim abnehmbaren Zahnersatz kann der Träger z.B. durch einen Prothesesattel gebildet werden, der mit Retetionen zur Befestigung der Prothesezähne versehen ist. Die Retetionen können z.B. durch Vorsprünge an dem Träger oder Löcher in dem Träger gebildet sein, um die beispielsweise aus Acrylharz hergestellte Verblendung mit den Prothesezähnen an dem Träger zu verankern.

Der Träger kann wenigstens zwei Prothesesättel aufweisen, die durch einen Bügel und/oder einen Steg miteinander verbunden sind.

Wenn der abnehmbare Zahnersatz mehrere Prothesesättel aufweist, können diese einstückig durch einen Bügel und/oder eine Gaumenplatte miteinander verbunden sein. Die Prothesesättel und der Bügel bzw. die Gaumenplatte bestehen also aus einen einzigen Spritzgußteil aus dem aromatischen Thermoplast.

Zur Verankerung an den natürlichen Restzähnen kann der Träger drahtförmige Befestigungselemente aufweisen, die die Restzähne umklammern oder zwischen zwei Restzähnen eingreifen.

Die drahtförmigen Befestigungselemente, mit denen die Prothese an den natürlichen Restzähnen verankert wird, zusammen mit dem oder den Prothesesätteln aus einem einzigen Spritzgußteil aus aromatischen Thermoplasten bestehen.

Der Träger kann einen patrizenförmigen Vorsprung zur Befestigung eines abnehmbaren Zahnersatzes mit matritzenförmigen Aufnahmen aufweisen. Der abnehmbare Zahnersatz kann zumindest im Bereich der matrizenförmigen Ausnehmung aus einem Material bestehen, das weicher ist als der aromatische Thermoplast, aus dem der Träger mit dem patrizenförmigen Vorsprung besteht.

Falls der Träger wenigstens einen Prothesesattel aufweist, der Retentionen zur Befestigung der Ersatzzähne aufweist, oder wenigstens zwei Prothesesättel, die durch einen Bügel und/oder einen Steg miteinander verbunden sind, kann der Träger des abnehmbaren Zahnersatzes außer im Bereich der matrizenförmigen Aufnahmen aus einem aromatischen Thermoplast bestehen.

Der festsitzende Zahnersatz kann z.B. eine Krone sein, wobei der Träger aus dem aromatischen Thermoplast, der mit dem Ersatzzahn verblendet wird, an dem präparierten Restzahn z.B. mit einem herkömmlichen Komposit-Klebstift befestigbar ist.

Wenn der Zahnersatz durch eine Krone gebildet wird, kann die Krone aus einem an dem präparierten Restzahn befestigbaren Primärteil und einem auf das Primärteil aufsteckbaren Sekundärteil bestehen. In diesem Fall wird erfindungsgemäß der Träger des Sekundärteils aus einem aromatischen Thermoplast gebildet, der mit dem Ersatzzahn z.B. aus Acrylharz verblendet wird. Das Primärteil kann dabei ebenfalls aus einem aromatischen Thermoplast spritzgegossen sein oder aus Metall bestehen.

Der festsitzende Zahnersatz kann ferner durch einen Stiftzahn gebildet werden. Der Träger aus dem aromatischen Thermoplast besteht dann aus dem im Zahnwurzelkanal verankerbaren Stift mit einer Retention, z.B. einem Vorsprung zur Verankerung der Verblendung mit dem individuell gefertigten Ersatzzahn.

Der aromatische Thermoplast kann aus ästhetischen Gründen auch eingefärbt werden, z.B. mit einem rosa Farbstoff. Desgleichen ist es möglich, eine entsprechend eingefärbte Kunststoffbeschichtung vorzusehen.

Nachstehend ist die Erfindung anhand von Ausführungsbeispielen näher erläutert. Darin zeigen:
- Fig. 1: eine Draufsicht auf einen abnehmbaren Zahnersatz;
- Fig. 2: eine perspektivische Ansicht eines abnehmbaren, an Kronen befestigbaren Zahnersatzes nach einer ersten Ausführungsform;
- Fig. 3: eine Seitenansicht eines abnehmbaren, an Kronen befestigbaren Zahnersatzes nach einer zweiten Ausführungsform;
- Fig. 4: einen Schnitt durch den Träger für einen festsitzenden Zahnersatz, der an zwei Restzähnen befestigbar ist;
- Fig. 5: einen Schnitt durch eine Krone nach der Teleskop-Technik;
- Fig. 6: einen Stiftaufbau in perspektivischer Wiedergabe; und
- Fig. 7: einen Schnitt durch eine Vorrichtung zur Herstellung eines Trägers.

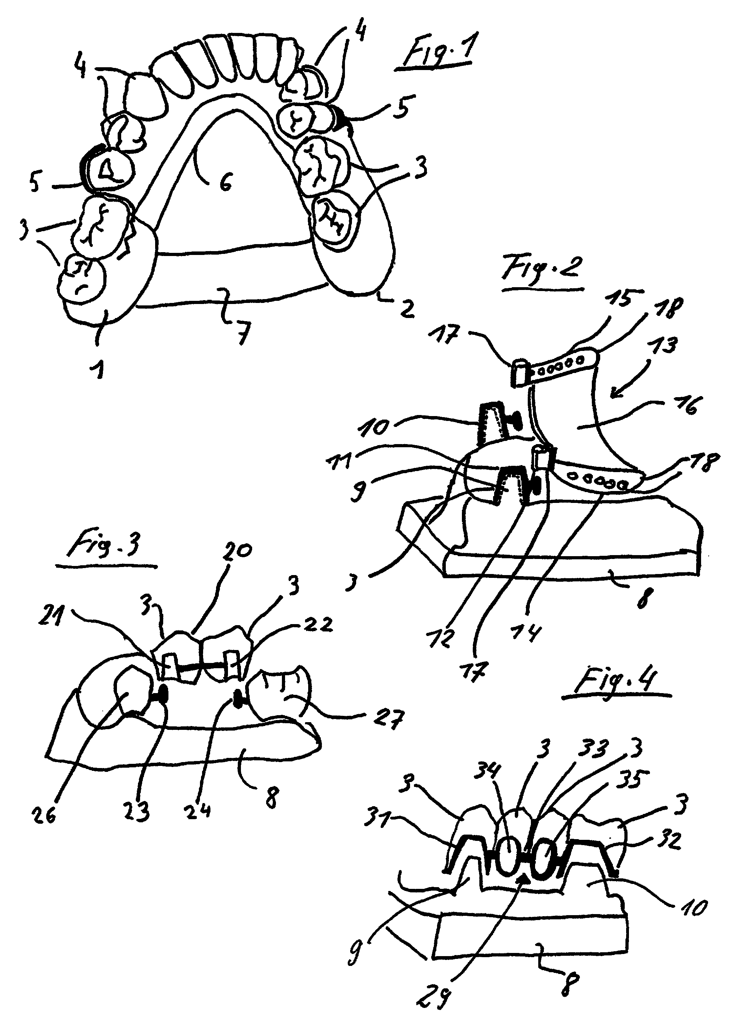

Gemäß Fig. 1 besteht der abnehmbare Zahnersatz aus zwei Prothesesätteln 1, 2, die Prothesezähne 3 tragen und Drahtbügel 5 aufweisen, die die benachbarten natürlichen Restzähne 4 umklammern, um den Zahnersatz zu befestigen.

Die Prothesesättel 1, 2 sind durch einen Bügel 6 sowie einen plattenförmigen Steg 7, der am Gaumen anliegt, miteinander verbunden.

Die Prothesesättel 1, 2 sind mit in Fig. 1 nicht sichtbaren Löchern versehen, in denen die beispielsweise aus Acrylharz gegossenen Prothesezähne 3 verankert sind.

Die Prothesesättel 1, 2, die Drahtbügel 5, der Bügel 6 und der plattenförmige Steg 7 bestehen aus einem einzigen Spritzgußteil aus PEEK. Aufgrund der hohen Festigkeit von PEEK können sowohl die Prothesesättel 1, 2, wie der Bügel 6 und der plattenförmige Steg 7 dünn ausgebildet werden, wodurch der Tragekomfort des Zahnersatzes wesentlich erhöht wird. Zugleich kann das Spritzgußteil, also die Prothesesättel 1, 2, der Bügel 6 und der plattenförmige Steg 7 zumindest an der Außenseite beispielsweise rosa eingefärbt sein.

Nach Fig. 2 sind auf dem Modell 8 die beiden präparierten Restzähne oder Stümpfe 9, 10 jeweils mit einem Träger 11 versehen, die jeweils mit einem Prothesezahn 3 z.B. aus Acrylharz verblendet sind. Jeder Träger 11 ist mit einem Knopfoder matrizenförmigen Vorsprung 12 versehen. Der Träger 11 mit dem Vorsprung 12 bildet dabei jeweils ein Spritzgußteil aus einem aromatischen Thermoplast. An den festsitzenden Kroneträgern 11 ist ein abnehmbarer Zahnersatz befestigbar, der als Träger 13 zwei Prothesesättel 14, 15 aufweist, die durch einen plattenförmigen Steg 16 verbunden sind, welcher am Gaumen anliegt. An der den Restzähnen 9, 10 zugewandten Seite weist der Träger 13 zwei matrizenförmige Aufnahmen 17 auf, in die die Vorsprünge 12 eingreifen, um den abnehmbaren Träger 13 zu befestigen. Die Prothesensattelabschnitte 14, 15 des Trägers 13 sind mit Löchern 18 versehen, die Retentionen zur Befestigung der in Fig. 2 nicht dargestellten Prothesezähne auf dem Träger 13 bilden.

Der Träger 13, also die Prothesesättel 14, 15 und der Steg 16, bilden ein Spritzgußteil aus einem aromatischen Thermoplast. Die matrizenförmigen Aufnahmen 17 bestehen jedoch aus einem Material, das weicher ist als der mit dem Vorsprung 12 versehene Träger 11 für die Krone.

Dadurch wird sichergestellt, dass sich die festsitzenden Vorsprünge 12 gegenüber den Aufnahmen 17 an dem Träger 13 des abnehmbaren und damit leichter austauschbaren Zahnersatzes weniger abnutzen. Die Aufnahmen 17 können dazu aus einem weichen Kunststoff bestehen. Es ist jedoch auch möglich, die Aufnahmen 17 einstückig mit dem Träger 13 aus einem aromatischen Thermoplasten zu bilden, wenn beispielsweise die matrizenförmigen Vorsprünge 12 aus Metall bestehen.

Gemäß Fig. 3 besteht der abnehmbare Zahnersatz aus einem Träger 20 aus einem aromatischen Thermoplast, der mit zwei Ersatzzähnen 3 z.B. aus Acrylharz verblendet ist. Der Träger 20 weist zwei matrizenförmige Aufnahmen 21, 22 auf, in die zur Befestigung des abnehmbaren Zahnersatzes zwei matrizenförmige Vorsprünge 23, 24 an den Kronen 26, 27 eingreifen, die entsprechend den Vorsprüngen 12 nach Fig. 2 an einem Träger 20 befestigt sein können, der mit dem Zahnstumpf mit einem Kompositklebstoff verbunden ist.

In Fig. 4 ist ein Träger 29 für einen festsitzenden Zahnersatz dargestellt, der zwei kappenförmige Kronenabschnitte 31, 32 aufweist, und an dem Verbindungsabschnitt 33 zwischen den Kronenabschnitten 31, 32 knopfförmige Retentionen 34, 35. Die Kronenabschnitte 31, 32 und die Retentionen 34, 35 werden jeweils mit Ersatzzähnen 3 z.B. aus Acrylharz verblendet. Der Träger 29 besteht aus einem aromatischen Thermoplast. Um die Verbindung des Trägers 29 mit den Prothesezähnen zu verbessern, kann der Träger 29 z.B. durch Sandstrahlen an der Oberfläche aufgerauht sein. Auch können auf dem Träger 29 Kunststoffretentionsperlen aufgeschmolzen werden. Das heißt, der Träger 29 wird mit den beispielsweise kegel- oder hutförmigen Kronenabschnitten 31, 32 auf den präparierten Restzähnen 9, 10 befestigt. Er weist zudem einen Verbindungsabschnitt auf, der die beiden Kronenabschnitte 31, 32 verbindet und an dem wenigstens ein Ersatzzahn 3 befestigt ist.

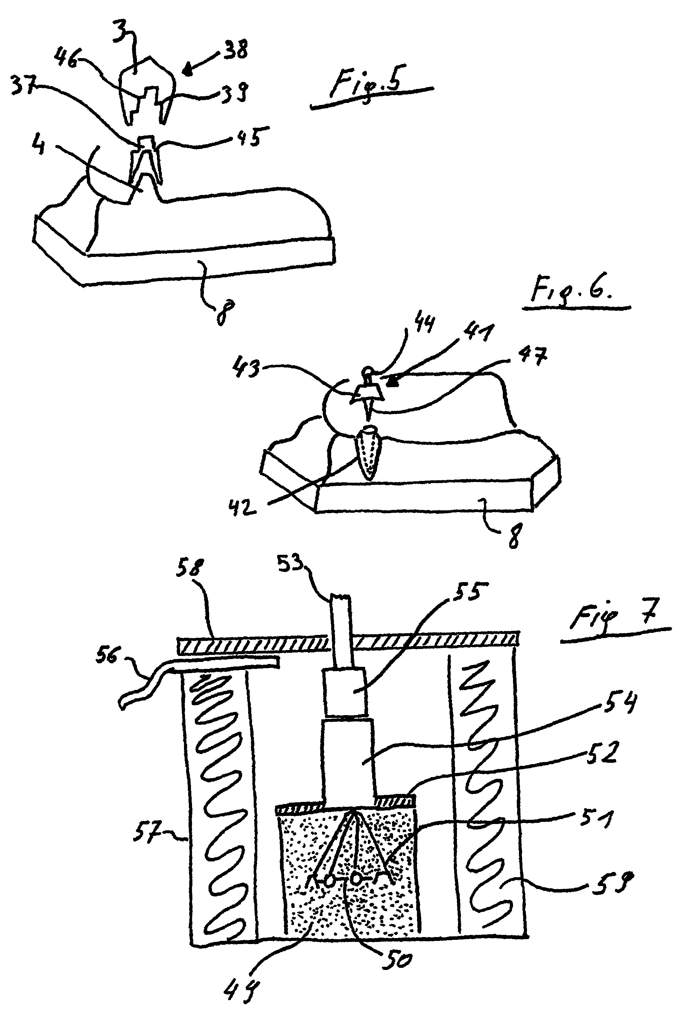

Bei der Teleskoptechnik nach Fig. 5 wird die Krone durch ein an dem präparierten Restzahn 4 befestigtes Primärteil 37 und einem auf das Primärteil 37 aufsteckbaren Sekundärteil 38 gebildet. Das Sekundärteil 38 besteht aus dem Träger 39 und dem darauf befestigten Ersatzzahn 3. Das sich zum Sekundärteil 38 verjüngende Primärteil 37 ist mit konzentrischen Stufen 45 versehen, und das Sekundärteil 38 mit korrespondierenden konzentrischen Stufen 46.

Das Teleskopprimärteil 37 kann aus einem aromatischen Thermoplast oder Metall bestehen, der Träger 39 besteht aus einem aromatischen Thermoplast.

Bei dem Stiftaufbau nach Fig. 6 besteht der Träger 41 aus dem aromatischen Thermoplast aus einem im Zahnwurzelkanal 42 verankerbaren Stift 47 mit einer Wurzelkappe 43 auf der ein Vorsprung 44 angeordnet ist, der als Retention oder als matrizenförmiger Vorsprung ausgebildet sein kann. Ein solcher Träger kann auch vorgefertigt sein.

Die Vorrichtung zur Herstellung des Trägers, beispielsweise des Trägers 29 nach Fig. 4 besteht aus einer Spritzgußform 49 aus einer feuerfesten Einbettmasse, die in der Mitte einen Hohlraum 50 aufweist, der dem zu gießenden Träger 29 entspricht. Von dem Hohlraum 50 führen Einspritzkanäle 51 zur Mitte der oberen Stirnseite der Form 49.

Auf dieser Stirnseite ist ein Deckelteil 52 angeordnet, das im Bereich der Mündung der Kanäle 51 eine Ausnehmung aufweist, um die sich ein Zylinder 54 erstreckt, der den plastifizierten aromatischen Thermoplast enthält.

In den Zylinder 54 ist ein Kolben 55 verschiebbar, um den plastifizierten Thermoplasten über die Kanäle 51 in den Hohlraum 50 zu pressen. Statt des Kolbens 55 kann auch eine Schnecke zum Plastifizieren und Pressen des Thermoplasten in die Spritzgußform 49 vorgesehen sein.

Die Spritzgußform 49 mit dem Deckelteil 52 und dem Zylinder 54 ist in einem Gehäuse 57 angeordnet, das durch einen Gehäusedeckel 58 verschließbar ist, durch den gasdicht verschiebbar geführt die Kolbenstange 53 ragt, die z.B. durch eine nicht dargestellten Arbeitszylinder pneumatisch oder hydraulisch betätigbar ist.

Das mit dem Gehäusedeckel 58 verschlossene Gehäuse 57 ist über die Leitung 56 evakuierbar. Es ist ferner beheizbar und mit einer Wärmeisolierung 59 versehen sein.

Statt des geschilderten Spritzgußverfahrens kann der Träger auch durch Tiefziehen, beispielsweise einer Platte mit einer Schichtdicke von z.B. 1 bis 3 mm mit Vakuum und/oder Druck hergestellt werden. Dies gilt insbesondere für den Träger 29 nach Figur 4 sowie den Träger 39 des Sekundärteils 38 nach Figur 5, aber auch für das Primärteil 37 nach Figur 5 sowie für den Bügel 6 und die Stege 7 und 16 nach Figur 1 und 2.

Desweiteren besteht die Möglichkeit, den Träger mit einem computergestützten System, wie Cerec, aus einem Block aus einem aromatischen Thermoplast zu fräsen.

## Patentansprüche

1. Vorrichtung zum Zahnersatz mit einem Träger, der an wenigstens einem natürlichen Restzahn verankerbar ist und auf dem wenigstens ein Ersatzzahn befestigbar ist, **dadurch gekennzeichnet, dass** der Träger (10, 11, 13, 20, 29, 39, 41) durch Spritzguß aus einem aromatischen Thermoplast gebildet ist.

2. Vorrichtung nach Anspruch 1 für abnehmbaren Zahnersatz, **dadurch gekennzeichnet, dass** der Träger (13) durch wenigstens einen Prothesesattel (1, 2, 14, 15) gebildet wird, der Retentionen (18) zur Befestigung der Ersatzzähne (3) aufweist.

3. Vorrichtung nach Anspruch 1 für festsitzenden Zahnersatz, **dadurch gekennzeichnet, dass** der festsitzende Zahnersatz durch eine Krone (26, 27) gebildet wird, der Träger (11) an dem präparierten Restzahn (9, 10) befestigbar ist und einen Ersatzzahn trägt.

4. Vorrichtung nach Anspruch 3, **dadurch gekennzeichnet, dass** der Träger (11) einen patrizenförmigen Vorsprung (12) zur Befestigung eines abnehmbaren Zahnersatzes mit matrizenförmigen Aufnahmen (17) aufweist.

5. Vorrichtung nach Anspruch 3, **dadurch gekennzeichnet, dass** der Träger (29) wenigstens zwei natürliche Restzähne (9, 10) verbindet und auf dem Träger (29) im Bereich der Restzähne und zwischen den Restzähnen Ersatzzähne (3) vorgesehen sind.

6. Vorrichtung nach Anspruch 1, **dadurch gekennzeichnet, dass** der Zahnersatz durch eine Krone gebildet wird, die aus einem an dem präparierten Restzahn (4) befestigbaren Primärteil (37) und einem auf das Primärteil (37) aufsteckbaren Sekundärteil (38) aus dem Träger (39) und dem darauf befestigten Ersatzzahn (3) besteht.

7. Vorrichtung nach Anspruch 1, **dadurch gekennzeichnet, dass** der Träger (41) aus einem im Zahnwurzelkanal (42) verankerbaren Stift (47) mit einem Vorsprung (44) besteht.

8. Vorrichtung nach einem der vorstehenden Ansprüche, **dadurch gekennzeichnet, dass** der aromatische Thermoplast Polyetheretherketon (PEEK) ist.

9. Verfahren zur Herstellung der Vorrichtung nach einem der vorstehenden Ansprüche, **gekennzeichnet durch** folgende Schritte:
- an einem aus einem Abdruck hergestellten Modell wird der Träger aus Wachs oder dgl. modulierbarem, verbrennbaren Material modelliert,
- der modellierte Wachsträger wird in einer Primärform angeordnet, wobei er mit Stäben aus brennbaren Material mit der Außenseite der Form verbunden wird,
- die Primärform wird mit einer feuerfesten Einbettmasse gefüllt,
- die Einbettmasse wird ausgehärtet,
- der Wachsträger und die Stäbe werden ausgebrannt, um die Spritzgußform mit einem Trägerhohlraum und Einspritzkanälen zu bilden,
- über die Einspritzkanäle wird der plastifizierte aromatische Thermoplast in den Trägerhohlraum gepreßt,
- der Träger wird entformt.

## Claims

1. A denture apparatus having a carrier adapted to be anchored on at least one natural remaining tooth and to which at least one replacement tooth is to be fastened, **characterized in that** the carrier (10, 11, 13, 20, 29, 39, 41) is formed from an aromatic thermoplastic by injection molding.

2. An apparatus according to claim 1 for a removable denture, **characterized in that** the carrier (13) is formed by at least one prosthetic saddle (1, 2, 14, 15) having retainers (18) for fastening the replacement teeth (3).

3. An apparatus according to claim 1 for a permanently fixed denture, **characterized in that** the permanently fixed denture is formed by a crown (26, 27), the carrier (11) is adapted to be fastened to the prepared remaining tooth (9, 10) and carries a replacement tooth.

4. An apparatus according to claim 3, **characterized in that** the carrier (11) has a patrix-shaped projection (12) for fastening a removable denture with matrix-shaped receiving means (17).

5. An apparatus according to claim 3, **characterized in that** the carrier (29) connects at least two natural remaining teeth (9, 10), and replacement teeth (3) are provided on the carrier (29) in the area of the remaining teeth and between the remaining teeth.

6. An apparatus according to claim 1, **characterized in that** the denture is formed by a crown consisting of a primary part (37) to be fastened to the prepared remaining tooth (4), and a secondary part (38) to be slipped on the primary part (37) and consisting of the carrier (39) and the replacement tooth (3) fastened thereto.

7. An apparatus according to claim 1, **characterized in that** the carrier (41) consists of a pin (47) having a projection (44) and to be anchored in the root channel (42).

8. An apparatus according to any of the above claims, **characterized in that** the aromatic thermoplastic is polyetheretherketone (PEEK).

9. A method for producing the apparatus according to any of the above claims, **characterized by** the following steps:
- molding the carrier of wax or a similar moldable, combustible material on a model produced from an impression,
- disposing the molded wax carrier in a primary mold, connecting it with the outside of the mold with rods of combustible material,
- filling the primary mold with a refractory embedding compound,
- curing the embedding compound,
- burning out the wax carrier and the rods in order to form the injection mold with a carrier cavity and injection channels,
- pressing the plasticized aromatic thermoplastic into the carrier cavity via the injection channels,
- demolding the carrier.

## Revendications

1. Dispositif pour prothèse dentaire comportant un support qui peut être ancré sur au moins une dent résiduelle naturelle et sur lequel peut être fixé au moins une dent de remplacement, **caractérisé en ce que** le support (10, 11, 13, 20, 29, 39, 41) est formé par moulage par injection à partir d'un thermoplaste aromatique.

2. Dispositif selon la revendication 1 pour prothèse dentaire amovible, **caractérisé en ce que** le support est formé par au moins un étrier de prothèse (1, 2, 14, 15) qui présente des rétentions (18) pour fixer les dents de remplacement (3).

3. Dispositif selon la revendication pour prothèse fixée, **caractérisé en ce que** la prothèse fixée est formée par une couronne (26, 27), **en ce que** le support (11) peut être fixé sur la dent résiduelle (9, 10) préparée et porte une dent de remplacement.

4. Dispositif selon la revendication 3, **caractérisé en ce que** le support (11) présente une saillie (12) en forme de poinçon pour fixer une prothèse dentaire amovible avec des logements (17) en forme de matrices.

5. Dispositif selon la revendication 3, **caractérisé en ce que** le support (29) relie au moins deux dents résiduelles naturelles (9, 10) et **en ce qu'**il est prévu des dents de remplacement (3) dans la région des dents résiduelles et entre les dents résiduelles.

6. Dispositif selon la revendication 1, **caractérisé en ce que** la prothèse dentaire est formée par une couronne qui est constituée par une partie primaire (37) susceptible d'être fixée sur la dent résiduelle (4) préparée et par une partie secondaire (38) susceptible d'être enfichée sur la partie primaire (37), par le support (39) et par la dent de remplacement (3) fixée sur celui-ci.

7. Dispositif selon la revendication 1, **caractérisé en ce que** le support (41) est constitué par un pivot (47) susceptible d'être ancré dans le canal de racine dentaire (42), avec une saillie (44).

8. Dispositif selon l'une des revendications précédentes, **caractérisé en ce que** le thermoplaste aromatique est du polyétheréthercétone (PEEK).

9. Procédé de fabrication du dispositif selon l'une des revendications précédentes, **caractérisé par** les étapes suivantes :
- sur un modèle réalisé à partir d'une empreinte, on façonne le support en cire ou en matériau modulable combustible,
- le support de cire façonné est agencé dans un moule primaire, et il est relié par des baguettes en matériau combustible avec la face extérieure du moule,
- le moule primaire est rempli d'une masse d'enrobage réfractaire,
- la masse d'enrobage est durcie,
- le support de cire et les baguettes sont détruites par combustion pour former le moule de moulage par injection avec une cavité de support et des canaux d'injection,
- le thermoplaste aromatique plastifié est pressé dans la cavité de support via les canaux d'injection,
- le support est démoulé.
